# EUROPEAN PATENT SPECIFICATION

(11) **EP 0 371 014 B1**
(45) Date of publication and mention of the grant of the patent: **26.05.1993**
(21) Application number: 88900713.4
(22) Date of filing: 22.07.1987
(51) Int. Cl.: H01S 3/038, H01S 3/0971

(54) **RF EXCITED ALL METAL GAS LASER**
RF-ANGEREGTER GANZMETALL-GASLASER
LASER A GAZ TOUT-METAL A EXCITATION HF

(43) Date of publication of application: 06.06.1990
(73) Proprietor: SYNRAD INCORPORATED, Bothell, WA 98011-8205 (US)
(72) Inventor: LAAKMANN, Peter, Seattle, WA 98177 (US)
(74) Representative: Grünecker, August, Dipl.-Ing.
(86) International application number: US8701754
(87) International publication number: WO8900775

(56) References cited:
- GB-A- 2 060 989
- GB-A- 2 065 960
- US-A- 4 481 634
- IEEE Journal of Quantum Electronics, vol. QE-17, no. 6, June 1981, IEEE, (New York, US); R.O. Miles et al.: "Optical gain measurements at 10.6 um in an 80 um hollow-core slab waveguide", pages 1071-1074
- J. PHYS. D: APPL. PHYS., vol. 11, no. 8, June 1978, The Institute of Physics, (Letchworth Herts., GB), D.V. Willetts et al.: "An anodised aluminium waveguide CO2 laser, pages L111-L114

## Description

### Technical Field

This invention relates generally to lasers and more specifically to all metal RF excited gas lasers.

### Background Art

RF excited waveguide carbon dioxide lasers have found a large number of applications in the last several years because of their compact size, reliability and relative ease of manufacture. The basic patent governing these lasers is U.S. Patent No. 4,169,251 issued to Katherine D. Laakmann. This patent describes the basic geometry and physics of the device. An additional patent, U.S. Patent No. 4,393,506 issued to Peter Laakmann, et al. covers the preferred implementation of such lasers as well as a novel water vapor getter. U.S. Patent No. 4,373,202 issued to Katherine D. Laakmann, et al. covers a longitudinally RF excited structure.

For commercial purposes and power levels up to about 25 watts the metal/ceramic technology disclosed in U.S. Patent No. 4,393,506 has been extremely successful because it combines low manufacturing cost with adequate performance and proven lifetime measured in years without gas replacement.

For military purposes, ceramic-only structures are being used to eliminate differential thermal expansion between the ceramic and metal parts of the cavity. The elimination of thermal mismatch is a requirement in these applications because of the typically required operating temperature range of -40 to +50 degrees Centigrade for military hardware. Similarly, high powered (above 25 watts) folded lasers for commercial applications are also being built from all ceramic structures to assure the greater precision required by these folded structures. The basic cavity structure of a longitudinally excited all ceramic laser is shown in U.S. Patent No. 4,373,202. The same physical structure has also been used with transverse RF excitation.

The all ceramic laser is intrinsically more costly to fabricate than the basic commercial metal/ceramic structure. However, for high power output or large operating temperature range, there has so far been no alternative.

An additional problem with both approaches is the fact that assembly and closure involves solder sealing. In the case of the metal/ceramic structure, relatively low temperature solder sealing must be used to avoid thermal distortion of the composite waveguide. In the base of the ceramic structure, no other method is known to seal the materials. The solder process requires a "wet" wash afterwards which leads to long reprocessing times to remove water contamination, the enemy of carbon dioxide laser gain.

Another problem in these prior art lasers is that the devices are difficult to "outgas" because the structures involve members under compression trapping gases, particularly water vapor.

Grossman et al (US 4,481,634) discloses an RF-Excited Metal Waveguide Laser wherein one of the two opposed electrodes forming the discharge region has its top surface thereof formed as a waveguide, thus eliminating the dielectric sidewalls used in prior art metal waveguide lasers.

### Disclosure of Invention

The present invention as defined in claim 1 solves the thermal mismatch problem of the prior art metal/ceramic laser by using an all metal structure to combine the advantages of metal fabrication with the performance advantages of a homogeneous structure.

An RF excited all metal laser seems at first a contradiction of terms because supporting the required electric fields generally requires insulators. An exception to that rule is a waveguide (microwave) excited gas medium. Such laser action has been demonstrated in the past but has been considered to be of no commercial value.

One embodiment of the all metal transversely excited laser consists of a structure similar to Figure 2 of U.S. Patent No. 4,373,202, but constructed from metal instead of ceramic. The structure consists of top and bottom aluminum plates separated by aluminum spacers to form a rectangular cavity or bore of about .1 to .3 inches in width and height. A transverse electric field is created by electrodes running along the bore on top and bottom. Electrode width may be 50 to 80% of the bore. Excitation is applied by means of a bi-phase drive where the instantaneous voltage of each electrode is 180 degrees out of phase relative to the other electrode when measured against reference ground (cavity walls). This forces the field to have a relatively uniform value along the electrode separation while cutting in half the electric field that has to be supported between electrode and ground.

The electrode pairs are created by converting the aluminum surface facing the bore to aluminum oxide by hard anodizing to a thickness of about 0.025 cm (0.01 inches). The electrodes are applied by evaporation, plating or other conventional processes. Additional insulator surfaces for protection of the electrode may be created by additional anodizing or a vacuum coating technique. This laser structure contains no commercial insulating materials except for wire feed-throughs and the like, which are not structural. Anodized metal surfaces are continuous with the base metal and do not have the temperature limitations of composite materials.

A second embodiment also employs the aluminum sandwich configuration but uses printed circuit films to carry the electrodes for the bi-phase excitation. These films may either be laminated to the top and bottom plates or be sandwiched between the aluminum parts. A useful thickness for the dielectic is 127-508 µm (5-20 mils). The electrode surface may also be laminated behind an additional layer of insulator. Useful insulating materials may be organic or inorganic, with inorganic materials the more stable choice. An example of inorganic materials would be mica and an example of an organic high temperature insulator would be polyimide. Technically, this printed circuit implementation is not "all metal." However, because the thickness and mechanical properties of the insulator layer do not affect the structural characteristics, it does not suffer from differential thermal expansion that would limit the operating or process temperature range of the device significantly.

A third embodiment of the invention has been found to be most useful since it addresses additional shortcomings of current lasers and satisfies all of the desired objectives. In this implementation no functional insulators at all are used. The bi-phase excitation is applied directly to two opposing walls of the bore using only a few mils of airspace as insulators in the corners of the cavity. The discharge forms between the electrodes spaced from 0.25 to 1.0 cm (0.1 to 0.4 inches) in a uniform way that ignores the presence of the closely spaced side walls. Any insulators in this type of device are used only to support the electrodes and are not near the discharge. It has been found by measurement and calculation that the electrodes can be cooled using the high thermal conductivity of the lasing gas without using structural (compression) members to conduct the heat away from the plasma. This embodiment can be conveniently fabricated using aluminum extrusion techniques for both housing and electrodes. This embodiment also used bi-phase excitation.

All of the above embodiments are based on using the non-linear breakdown and ionization characteristics of gases. In typical gases, breakdown and subsequent ionization occur at a particular combination of field strength (E-field) and absolute RF potential, as well as frequency. In typical (solid) insulators, breakdown is almost exclusively a function of E-field (RF or DC).

This means that the ionization potential of a gas does not change proportionally to the gap spacing. A way to visualize this affect is to realize that a certain amount of absolute kinetic energy is required before ionization can occur. Therefore, a large gap spacing combined with a large voltage allows for a longer acceleration distance and therefore facilitates ionization. Since bi-phase excitation cuts the RF potential of each electrode relative to ground to 1/2 its total value, it can be seen that the voltage required to cause discharge to ground is always more than 1/2 the total value required to cause discharge between electrodes as long as the spacing to ground is much less than the electrode spacing, and, of course, much larger in non-functional peripheral areas. For this reason the discharge is confined to the electrode gap.

It has been found that this desirable situation takes on extreme values for the laser gases and pressures used in typical gas lasers. For example experiments have shown that a gap spacing of 0.75 cm (0.3 inches) with each electrode being separated from ground by only 0.0125 cm (0.005 inches) does not lead to discharge between electrode and ground while initiating and maintaining the electrode to electrode plasma. Note that the field strength between electrode and ground in this case is 30 times greater than the field strength between electrodes. The 0.0125 cm dimension is not a limiting case but simply a convenient distance that was tested.

This effect then makes possible both the insulating and cooling features of the above embodiments.

### Objects of the Invention

It is a principal object of the present invention to overcome the aforementioned thermal mismatch problems of prior art lasers by providing an all metal gas laser which affords the easier fabrication of a metal structure and performance advantages of a homogeneous structure.

It is an additional object of the present invention to provide a gas laser the structure of which can be sealed by welding without requiring costly and potentially disadvantageous wet processing.

It is still an additional object of the present invention to provide a gas laser structure which more substantially eliminates traps and virtual leaks to improve gas cleanliness and outgassing.

It is still an additional object of the present invention to provide a novel gas laser of reduced complexity and which is easier to fabricate and assemble as compared to prior art gas lasers.

The aforementioned objects and advantages of the present invention, as well as additional objects and advantages thereof, will be more fully understood hereinafter as a result of a detailed description of preferred embodiments of the invention when taken in conjunction with the following drawings.

### Brief Description of the Drawings

Figure 1 is a cross-sectional exploded view of a first embodiment of the invention.

Figure 2 is a cross-sectional exploded view of a second embodiment of the invention.

Figure 3 is a cross-sectional view of a third embodiment of the invention.

### Best Mode for Carrying Out the Invention

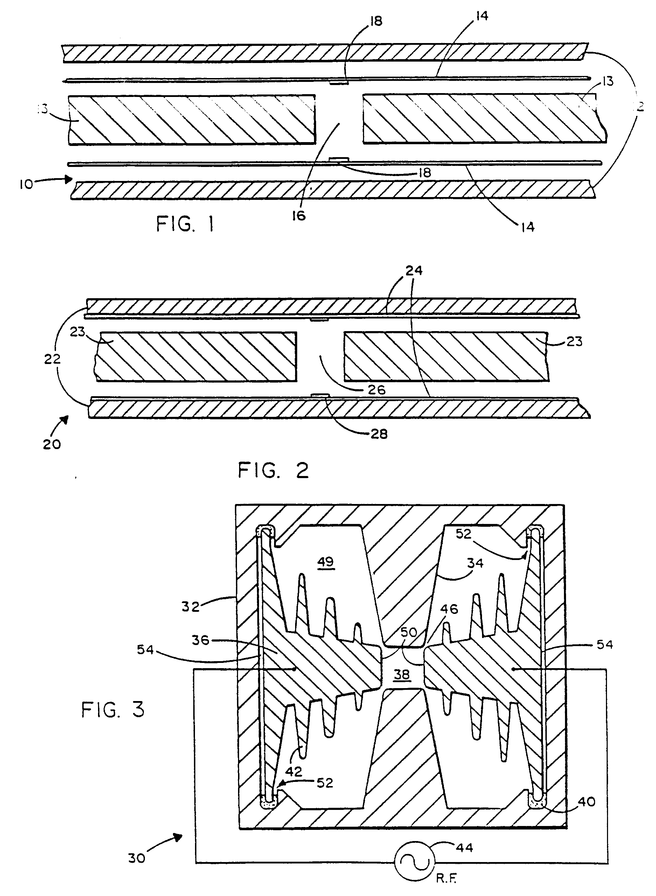

Referring first to Figure 1, it will be seen that the first all metal gas laser embodiment 10 of the present invention comprises top and bottom aluminum plates 12 separated by a pair of aluminum spacers 13 to form a rectangular cavity or bore 16. The plates and spacers are shown separated to better illustrate the structure of the invention. However, in the final structure the plates and spacers may be in contact or separated by small air gaps. In typical applications, cavity or bore 16 would have dimensions of 0.25 to 1.0 cm (0.1 to 0.4 inches) in both width and height. A transverse electric field is created by electrodes 18 running along the top and bottom of bore 16. The electrodes 18 may, by way of example, be 50% to 80% of the bore width. Excitation is applied utilizing a bi-phase drive where the instantaneous voltage of each electrode is 180 degrees out of phase with respect to the other when measured against reference ground at the cavity walls. Such bi-phase drive forces the field to have a sufficient value along the electrode separation while halving the electric field that must be supported between the electrode and ground. The electrodes 18 are provided on a pair of polyimide printed circuit films 14 which may be either laminated to the top and bottom plates 12 or sandwiches between the aluminum parts. A typical thickness for the polyimide printed circuit film dielectric is 127-508 µm (5-20 mils) The electrode surface may also be laminated behind an additional layer of polyimide. Polyimide is a proven vacuum material of excellent electrical and thermal properties. Its expansion coefficient closely matches that of aluminum. However expansion match is not an issue as the thin film is not structural in nature and cannot distort the underlying metal structure.

The second all metal gas laser embodiment 20 of the present invention is represented in Figure 2. This embodiment comprises a pair of aluminum plates 22, a pair of aluminum spacers 23, the latter forming a rectangular cavity or bore 26 and a pair of electrodes 28 all of which function and serve the same purpose as the corresponding elements of the first embodiment of the invention illustrated in Figure 1. However, in the second embodiment of Figure 2, instead of using a pair of printed circuit films, the electrode pairs are created by converting the aluminum surfaces facing the bore 26 to aluminum oxide by hard anodizing aluminum plates 22 to form corresponding aluminum oxide surfaces 24 which may be of about 0.025 cm (0.01 inches) in depth. The electrodes 28 are applied by evaporation plating or other conventional processes. Additional insulator surfaces for protection of the electrodes can be provided by additional anodizing or vacuum coating techniques.

This second embodiment of the invention contains no commercial insulating materials except wire feed-throughs and the like, all of which are not structural. Anodized metal surfaces are continuous with the base metal and therefore do not have temperature limitations. The aluminum oxide integral dielectric does not introduce any new elements into the laser that may contaminate it. Lasers routinely operate with anodized surfaces in direct contact with the plasma. Furthermore, the dielectric strength of anodized surfaces easily supports the 100 volts or more of radio frequency signal strength required. Excellent laser operation and performance life can therefore be anticipated. Figure 2 also shows the plates and spacers separated only for purposes of better illustrating the inventive structure.

A third all metal gas laser embodiment of the present invention is shown in cross-section in Figure 3. This embodiment is a convection/conduction gas insulated laser structure designed to use an extruded aluminum housing 32. Aluminum housing 32 forms a pair of grounded wall members 34 which provide two of the four surfaces forming a rectangular cavity or bore 38. The other two surfaces forming bore 38 are provided by a pair of finned electrodes 36 which may also be extruded aluminum components of the third embodiment. Aluminum housing 32 may, by way of example, be a 5 cm (2 inches) square extrusion and the two finned electrodes 36 may, by way of example, also be aluminum extrusions. The electrode extrusions are provided with longitudinal fins 42 to facilitate convention cooling. Spaces or gaps 46 are provided at the corners of the rectangular cavity or bore 38 in a dimension of about 0.0025 to 0.125 cm (0,0025 - 0,125 cm) space between the bore facing surfaces of the electrodes 36 and the bore facing surfaces of the grounded wall members 34. Gaps 46 may be made equal to zero by relying on anodizing as insulation. Such a closed periphery bore is desirable in true waveguide lasers having bore sizes near 0.25 cm (0.1 inches) to limit diffraction losses. A "true waveguide" laser is one in which the laser electromagnetic mode is substantially independent of the optics and is instead substantially dependent only on the laser bore geometry and wherein the laser operates in the fundamental mode. Gaps 54 between the electrodes 36 and the housing 32 provide gas conduction cooling. Electrodes 36 are provided with anodized discharge facing surfaces 50 in the form of a thin, hard anodized coating to reduce hot spots The anodized layer may, by way of example, be 0.0127 to 0.0508 µm (0.0005-0.002 mils) in thickness.

The electrical capacity of the structure of the third embodiment of the invention shown in Figure 3 is about 8.5 picoFarads per linear 2,5 cm (1 inch) measured across the discharge. The temperature rise of each electrode is about 22 degrees Centigrade at a power input of 10 watts per linear 2.5 cm (1 inch). Because the top and bottom electrodes are directly connected to the outside of the housing 32, the average temperature rise of the rectangular cavity or bore 38 is therefore about 11 degrees Centigrade. Because the plasma core has a temperature rise of about 150 degrees Centigrade, it is evident that more than adequate heat removal is attained by the structure of the third embodiment.

Electrical excitation is provided by the radio frequency generator 44 connected to the electrodes 36. Electrical excitation frequency is normally in the range of 20-200 MHz and more typically would be one of the authorized ISM frequencies at 27 or 40 MHz. The RF excitation is applied in a balanced bi-phase form so that each electrode carries only one-half of the total voltage to ground.

Electrodes 36 are supported by Teflon® or polyimide spacers or insulator guides 40 at periodic intervals of several inches (1 inch = 2.54 cm) along the length of the laser. Insulator guides 40 also act as bearings during the assembly of the third embodiment 30 which consists of sliding the electrodes 36 into the housing extrusion recesses 52. Induction coils (not shown) to neutralize the capacity at the operating frequency may be applied at both ends of the assembly prior to closing the tube with the end plate optical assemblies (not shown) as is typical in current state-of-the-art lasers. Alternatively, the coils may be applied externally where the bi-phase radio frequency excitation is applied to the structure of the laser. Insulator guides 40 hold the electrodes 36 spaced from the side walls of the aluminum housing 32 thereby forming a pair of open space insulating gaps 54 on either side of the housing.

It has been found by measurement and calculation that the electrodes 36 can be cooled using the high thermal conductivity of the lasing gas which is typically about 70% helium. Accordingly, it is not necessary to use structural compression members to conduct away the heat from the plasma. Therefore this type of device can be conveniently fabricated using easily manufactured aluminum extrusion techniques for both the housing and electrodes. Essentially all interior surfaces of the laser are in direct contact with the lasing gas. Therefore, outgassing during laser processing is much more effective leading to a cleaner gas, longer life and making it possible to provide gas lasers that are more sensitive to contamination such as carbon monoxide lasers.

Because the dielectric constant of the insulating medium is 1.0 instead of 8.9 for the typically used alumina ceramic, electrical standing waves along the laser bore are increased in wavelength by up to √8̅.̅9̅, thereby leading to more uniform E-field, longer lasers and higher useful excitation frequencies. Elimination of thermal expansion mismatch makes possible an all welded, dry process device that can withstand high bakeout temperatures and military temperature ranges. The elimination of machined ceramic parts and the ease of assembly due to the elimination of compression heat sinking design, significantly reduce the cost of fabrication. By using convection and conduction cooling of the electrodes, the absence of the high dielectric constant insulators found in prior art lasers, reduces the electrical capacity, thereby resulting in the opportunity to use higher operating frequencies and maintaining higher electrical efficiencies. The corner gaps 46 permit transverse gas exchange between the plasma and the tube gas contained within chambers 49 adjacent the cooling fins 42. This provides additional gas convection cooling as well as a continuous supply of fresh gas. Both of these effects increase the laser efficiency.

The convection/conduction cooled gas insulated laser structure of Figure 3 is ideally suited as a replacement for metal-ceramic gas lasers of the prior art such as that disclosed in U.S. Patent No. 4,393,506 because both of these devices use similar low cost fabrication techniques. However, the all metal extruded design of Figure 3 is also capable of operating within the military temperature range and obviates the need for prior art all ceramic structures. Each of the novel embodiments of the invention herein disclosed including the third embodiment illustrated in Figure 3, can be provided in a folded configuration for better packaging and higher power levels. Furthermore, the anodized and printed circuit configurations of the embodiments illustrated in Figures 1 and 2, would find very advantageous use in small, rugged devices exposed to severe shock and vibration such as in missiles and munitions where only short operating times are required.

It will now be understood that what has been disclosed herein comprises all metal RF excited gas lasers which are at least as cost competitive as comparable gas lasers, the structures of which combine ceramics and metal components. However, the performance of the disclosed invention, particularly in regard to broad operating temperature ranges, is comparable to more expensive and more complex all ceramic structures. The present invention overcomes the prior art thermal mismatch problems of less expensive lasers of the prior art by providing an all metal gas laser which affords the easier fabrication of an all metal structure while providing the performance advantages of a homogeneous prior art structure. Furthermore, the present invention provides a gas laser structure which can be sealed by welding without requiring costly and potentially disadvantageous wet processing. It eliminates traps and leaks to improve gas cleanliness and outgassing, and it is of reduced complexity and is easier to fabricate and assemble as compared to prior art gas lasers. Three alternative embodiments have been disclosed. One such embodiment utilizes a novel printed circuit configuration and another utilizes a novel anodized surface configuration. The third embodiment represents a particularly advantageous and radical departure from prior art laser structures because of the use of readily fabricated extruded parts and furthermore because of the unique capability to rely entirely upon gas convection/conduction cooling.

## Claims

1. An RF-excited gas laser, comprising:
a pair of spaced, parallel metal plates (12;22);
a pair of metal spacers (13;23) separating said plates, said plates and spacers forming an elongated laser bore (16;26);
a laser gas medium within said bore; and
a pair of metal discharge electrodes (18;28) located upon opposing surfaces within said bore and parallel to the longitudinal axis of said bore, said electrodes being connectable to a source of RF-excited voltage, said electrodes being electrically insulated from said opposing surfaces by nonconductive films (14;24) between said electrodes and said opposing surfaces, respectively.

2. The gas laser recited in claim 1 wherein said non conductive films (14) comprise an inorganic material such as polyimide.

3. The gas laser recited in claim 1 wherein said non conductive film (14) comprise an inorganic dielectric material such as mica.

4. The gas laser recited in claim 1 wherein said non conductive film (24) comprise an oxide of the electrode metal.

5. The gas laser recited in claim 1 wherein said non conductive films (24) comprise an oxide of the metal of said opposing surfaces.

6. The gas laser recited in claim 1 wherein the metal of said plates (12;22) and of said spacers (13;23) have substantially equal thermal expansion coefficients.

7. The gas laser recited in claim 1 wherein the metal of said plates (12;22) and the metal of said spacers (13;23) are the same metals.

8. The gas laser recited in claim 1 wherein the metal of said plates (12;22), the metal of said spacers (13;23) and the metal of said electrodes (18;28) are the same metals.

9. The gas laser recited in claim 1 wherein said electrodes (18;28) are excited by oppositely phased excitation voltages relative to ground potential.

10. The gas laser recited in claim 1 wherein said bore (16;26) has a width and a height within the range of 0.25 to 1.0 cm (0.1 to 0.4 inches).

11. The gas laser recited in claim 1 wherein the material used to form plates (12;22), spacers (13;23), electrodes (18;28) and insulators (14;24) is aluminum.

12. The gas laser recited in claim 1 wherein the electrodes (28) are anodized.

13. The gas laser recited in claim 1 wherein an additional insulator (14) is applied to the electrode (18) surface facing the bore.

14. The gas laser recited in claim 1 wherein the said metal spacers (13;23;36) are separated from the said metal plates (12;22;32) by an air gap.

15. The gas laser recited in claim 14 wherein the laser gas medium within the plasma communicates with external gas by convection transverse to the bore axis.

16. The gas laser recited in claim 14, further comprising a source of RF-excited voltage (44) connected to said pair of metal discharge electrodes (36), the voltage generating a plasma in said elongated laser bore, substantially all of the heat generated by the plasma being carried away from the laser bore (38) by conduction, convection and radiation through the laser gas medium.

## Patentansprüche

1. Ein RE-angeregter Gaslaser mit
einem Paar von beabstandeten, parallelen Metallplatten (12, 22);
einem Paar von Metallabstandshaltern (13, 23), die die Platten voneinander trennen, wobei die Platten und Abstandshalter einen länglichen Laserhohlraum bilden;
einem Lasergasmedium innerhalb des Hohlraums; und
einem Paar von Metallentladungselektroden (18, 28), die auf einander gegenüberliegenden Oberflächen innerhalb des Hohlraums und parallel zu der longitudinalen Achse des Hohlraums gelegen sind, wobei die Elektroden mit einer Quelle einer RF-angeregten Spannung verbindbar sind, und die Elektroden elektrisch isoliert von den einander gegenüberliegenden Oberflächen durch nichtleitende Filme (14, 24) zwischen den Elektroden und den einander gegenüberliegenden Oberflächen sind.

2. Der Gaslaser gemäß Anspruch 1, wobei der nichtleitende Film (14) ein inorganisches Material wie Polyimid umfaßt.

3. Der Gaslaser gemaß Anspruch 1, wobei der nichtleitende Film (14) ein inorganisches dielektrisches Material wie Glimmer umfaßt.

4. Der Gaslaser gemäß Anspruch 1, wobei die nichtleitenden Filme (24) ein Oxid des Elektrodenmetalls umfassen.

5. Der Gaslaser gemäß Anspruch 1, wobei die nichtleitenden Filme (24) ein Oxid des Metalls der einander gegenüberliegenden Oberflächen umfassen.

6. Der Gaslaser gemäß Anspruch 1, wobei das Metall der Platten (12, 22) und der Abstandshalter (13, 23) im wesentlichen die gleichen thermischen Ausdehnungskoeffizienten haben.

7. Der Gaslaser gemäß Anspruch 1, wobei das Metall der Platten (12, 22) und das Metall der Abstandshalter (13, 23) die gleichen Metalle sind.

8. Der Gaslaser gemäß Anspruch 1, wobei das Metall der Platten (12, 22), das Metall der Abstandshalter (13, 23) und das Metall der Elektroden (18, 28) die gleichen Metalle sind.

9. Der Gaslaser gemäß Anspruch 1, wobei die Elektroden (18, 28) durch in der Phase relativ zum Massepotential entgegengesetzte Anregungsspannungen angeregt werden.

10. Der Gaslaser nach Anspruch 1, wobei der Hohlraum (16, 26) eine Breite und eine Höhe in dem Bereich von 0,25 bis 1,0 cm (0,1 bis 0,4 Inches) hat.

11. Der Gaslaser gemäß Anspruch 1, wobei das zum Bilden der Platten (12, 22), Abstandshalter (13, 23), Elektroden (18, 28) und Isolatoren (14, 24) verwendete Material Aluminium ist.

12. Der Gaslaser gemäß Anspruch 1, wobei die Elektroden (28) anodisiert sind.

13. Der Gaslaser gemäß Anspruch 1, wobei ein zusätzlicher Isolator auf der dem Hohlraum zugewandten Oberfläche der Elektrode (18) angebracht ist.

14. Der Gaslaser gemäß Anspruch 1, wobei die Metallabstandshalter (13, 23, 36) von dem Metallplatten (12, 22, 32) durch eine Luftlücke getrennt sind.

15. Der Gaslaser gemäß Anspruch 14, wobei das Lasergasmedium in dem Plasma mit einem äußeren Gas durch Konvektion transversal zu der Hohlraumachse in Verbindung steht.

16. Der Gasläßer gemäß Anspruch 14 mit einer Quelle einer RF-angeregten Spannung (44), die mit dem Paar von Metall-Entladungselektroden (36) verbunden ist, wobei die Spannung ein Plasma in dem länglichen Laserhohlraum erzeugt und im wesentlichen die gesamte von dem Plasma erzeugte Wärme aus dem Laserhohlraum (38) durch Leitung, Konvektion und Strahlung durch das Lasergasmedium abgeführt wird.

## Revendications

1. Laser à gaz à excitation RF, comportant :
deux plaques métalliques parallèles espacées (12 ; 22) ;
deux entretoises métalliques (13 ; 23) séparant les plaques, lesdites plaques et lesdites entretoises formant une cavité laser allongée (16 ; 26) ;
un milieu gazeux à effet laser à l'intérieur de ladite cavité ; et
deux électrodes métalliques (18 ; 28) de décharge placées sur des surfaces opposées à l'intérieur de ladite cavité et parallèles à l'axe longitudinal de ladite cavité, lesdites électrodes pouvant être connectées à une source de tension d'excitation RF, lesdites électrodes étant isolées électriquement desdites surfaces opposées par des films non conducteurs (14 ; 24) entre lesdites électrodes et lesdites surfaces opposées, respectivement.

2. Laser à gaz selon la revendication 1, dans lequel lesdits films non conducteurs (14) comprennent une matière inorganique telle qu'un polyimide.

3. Laser à gaz selon la revendication 1, dans lequel lesdits films non conducteurs (14) comprennent une matière diélectrique inorganique telle que du mica.

4. Laser à gaz selon la revendication 1, dans lequel lesdits films non conducteurs (24) comprennent un oxyde du métal des électrodes.

5. Laser à gaz selon la revendication 1, dans lequel lesdits films non conducteurs (24) comprennent un oxyde du métal desdites surfaces opposées.

6. Laser à gaz selon la revendication 1, dans lequel les métaux desdites plaques (12 ; 22) et desdites entretoises (13 ; 23) ont des coefficients de dilatation thermique sensiblement égaux.

7. Laser à gaz selon la revendication 1, dans lequel le métal desdites plaques (12 ; 22) et le métal desdites entretoises (13 ; 23) sont les mêmes métaux.

8. Laser à gaz selon la revendication 1, dans lequel le métal desdites plaques (12 ; 22), le métal desdites entretoises (13 ; 23) et le métal desdites électrodes (18 ; 28) sont les mêmes métaux.

9. Laser à gaz selon la revendication 1, dans lequel lesdites électrodes (18 ; 28) sont excitées par des tensions d'excitation à phases opposées par rapport à un potentiel de masse.

10. Laser à gaz selon la revendication 1, dans lequel ladite cavité (16 ; 26) a une largeur et une hauteur comprises dans la plage de 0,25 à 1,0 cm (0,1 à 0,4 inch).

11. Laser à gaz selon la revendication 1, dans lequel la matière utilisée pour former les plaques (12 ; 22), les entretoises (13 ; 23), les électrodes (18 ; 28) et les isolateurs (14 ; 24) est l'aluminium.

12. Laser à gaz selon la revendication 1, dans lequel les électrodes (28) sont anodisées.

13. Laser à gaz selon la revendication 1, dans lequel un isolateur supplémentaire (14) est appliqué sur la surface des électrodes (18) faisant face à la cavité.

14. Laser à gaz selon la revendication 1, dans lequel lesdites entretoises métalliques (13 ; 23, 36) sont séparées desdites plaques métalliques (12 ; 22 ; 32) par un intervalle d'air.

15. Laser à gaz selon la revendication 14, dans lequel le milieu gazeux à effet laser à l'intérieur du plasma communique avec un gaz extérieur par convection transversalement à l'axe de la cavité.

16. Laser à gaz selon la revendication 14, comportant en outre une source de tension (44) d'excitation RF connectée à ladite paire d'électrodes métalliques (36) de décharge, la tension générant un plasma dans ladite cavité allongée du laser, pratiquement la totalité de la chaleur générée par le plasma étant évacuée de la cavité (38) du laser par conduction, convection et rayonnement à travers le milieu gazeux à effet laser.
